(19) Europäisches Patentamt
European Patent Office
Office européen des brevets

(11) Veröffentlichungsnummer: **0 412 414 A2**

(12) **EUROPÄISCHE PATENTANMELDUNG**

(21) Anmeldenummer: **90114737.1**

(22) Anmeldetag: **01.08.90**

(51) Int. Cl.[5]: **C08L 71/12**, C08L 25/00, C08L 51/06

(30) Priorität: **11.08.89 DE 3926562**

(43) Veröffentlichungstag der Anmeldung: **13.02.91 Patentblatt 91/07**

(84) Benannte Vertragsstaaten: **BE DE FR GB IT NL**

(71) Anmelder: **BASF Aktiengesellschaft**
**Carl-Bosch-Strasse 38**
**D-6700 Ludwigshafen(DE)**

(72) Erfinder: **Ostermayer, Bertram, Dr.**
**Zeppelinstrasse 179**
**D-6900 Heidelberg(DE)**
Erfinder: **Baumgartner, Ehrenfried, Dr.**
**Goethestrasse 1**
**D-6701 Roedersheim-Gronau(DE)**
Erfinder: **Muehlbach, Klaus, Dr.**
**Dr.-Heinrich-Winter-Strasse 19**
**D-6148 Heppenheim(DE)**
Erfinder: **Blumenstein, Uwe, Dr.**
**Ganderhofstrasse 2**
**D-6700 Ludwigshafen(DE)**

(54) **Thermoplastische Formmassen.**

(57) Thermoplastische Formmasse auf der Grundlage einer Polymermischung aus 10 bis 90 Gew.-% eines Polyphenylenethers und
90 bis 10 Gew.-% eines schlagfest modifizierten Styrolpolymerisats
der außerdem, bezogen auf die Formmasse bis zu 30 Gew.-% übliche Zusatzstoffe in jeweils wirksamer Menge enthält, dadurch gekennzeichnet, daß das Styrolpolymerisat modifiziert ist mit einem Pfropfcopolymeren mit wiederkehrenden Einheiten der allgemeinen Struktur I oder II

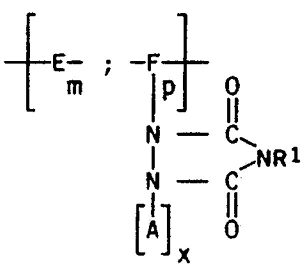 (I)

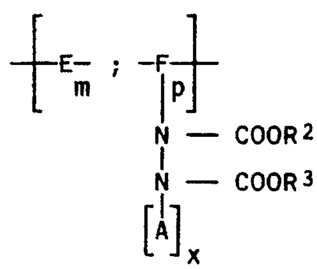 (II)

in der A eine polymere Seitenkette aus einem durch radikalische Polymerisation gebildeten Homo- oder Copolymeren des Styrols, x deren Polymerisationsgrad, E und F einpolymerisierte Fadenabschnitte eines Elastomeren und m und p jeweils wenigstens 1 und zusammen eine Zahl von mehr als 100 bedeuten, die durch Addition eines 4-substituierten 1,2,4-Triazolin-3,5-dions und/oder Azodicarbonsäureesters an einen eine allylische CH-Gruppierung oder einen anderen, bewegliche Protonen aufweisenden Fadenabschnitt des Elastomeren gebildet worden sind, wobei die Substituenten $R^1$ bzw. $R^2$ und $R^3$ Alkyl, Aryl oder Hetaryl oder deren Äuqivalente bedeuten und $R^2$ und $R^3$ gleich oder verschieden sein können.

EP 0 412 414 A2

## THERMOPLASTISCHE FORMMASSEN

Die Erfindung betrifft thermoplastische Formmassen, nämlich Mischungen aus schlagfest modifizierten Styrolpolymerisaten (HIPS) und Polyphenylenethern (PPE).

Thermoplastische Massen, die sich zur Herstellung von Formteilen eignen und die schlagzäh modifizierte Styrolpolymerisate und Polyphenylenether enthalten, sind z.B. aus den US-Patentschriften 3 383 435, 4 128 602 sowie der DE 22 11 005 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß einige Eigenschaften der Massen noch unbefriedigend sind, obwohl im Laufe der Zeit ständig an Verbesserungen dieser Formmassen gearbeitet worden ist.

So ist in der DE 22 11 065 vorgeschlagen worden, ein kautschukmodifiziertes Polystyrol einzusetzen, das 22 bis 80 Gew.-% einer elastomeren Gelphase enthält. Nach der EP 0 048 399 soll die Kautschukphase Elastomerpartikel enthalten, die eine bimodale Teilchengrößenverteilung aufweisen; die Schlagzähigkeit und die Steifigkeit solcher Formmassen ist aber noch nicht ausreichend.

In DE 24 48 848 werden Formmassen aus einem Polyphenylenether und einem schlagfesten Polystyrol beschrieben, die mit einem hydrierten Blockkautschuk schlagzäh modifiziert sind. Diese Formmassen haben aber erfahrungsgemäß eine schlechte Wärmeformbeständigkeit.

Durch den Einsatz von mit EPDM-Kautschuk modifiziertem Polystyrol werden PPE/HIPS-Formmassen mit verbesserter Witterungsbeständigkeit erhalten, deren Schlagzähigkeit jedoch noch verbesserungsbedürftig ist (US 3,943,191).

Die Erfindung löst die Aufgabe, thermoplastische Formmassen auf der Grundlage von schlagfest modifizierten Styrolpolymerisaten und Polyphenylenethern zu schaffen, die sich durch eine günstige Kombination hoher Wärmeformbeständigkeit, hoher Steifigkeit und guter Schlagzähigkeit auszeichnen.

Die Aufgabe wird erfindungsgemäß gelöst durch Formmassen, die als Polymermischung 10 bis 90, insbesondere 20 bis 80 Gew.-% eines Polyphenylenethers 10 bis 90, insbesondere 20 bis 80 Gew.-% eines speziellen, schlagzäh modifizierten Styrolpolymerisats sowie, falls gewünscht, einschlägig übliche Zusatzstoffe in jeweils wirksamer Menge enthalten. Die verschiedenen Angaben in Gew.-% beziehen sich auf die Summe der Polymeren, d.h. Polyphenylenether und Styrolpolymer; die Formmasse kann bis zu 30 %, bezogen auf das gesamte Gewicht der Formmasse, übliche Zusatzstoffe evtl. auch weitere Polymere enthalten.

Erfindungsgemäß ist das Styrolpolymerisat schlagzähmodifiziert mit einem Pfropf(co)polymeren mit wiederkehrenden Einheiten der allgemeinen Struktur I oder II

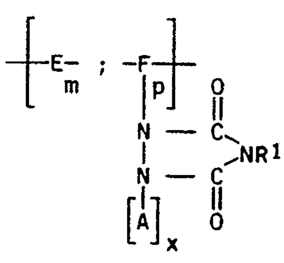 (I) 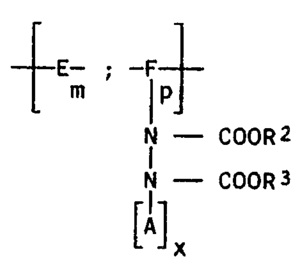 (II) ,

in der A eine polymere Seitenkette aus einem durch radikalische Polymerisation gebildeten Homo- oder Copolymeren des Styrols, x deren Polymerisationsgrad, E und F einpolymerisierte Fadenabschnitte eines Elastomeren und m und p jeweils wenigstens 1 und zusammen eine Zahl von mehr als 100 bedeuten, die durch Addition eines 4-substituierten 1,2,4-Triazolin-3,5-dions und/oder Azodicarbonsäureesters an einen eine allylische CH-Gruppierung oder einen anderen, bewegliche Protonen aufweisenden Fadenabschnitt des Elastomeren gebildet worden sind, wobei die Substituenten $R^1$ bzw. $R^2$ und $R^3$ Alkyl, Aryl oder Hetaryl oder deren Äuqivalente bedeuten und $R^2$ und $R^3$ gleich oder verschieden sein können.

Die erfindungsgemäßen Formmassen zeichnen sich durch eine günstige Eigenschaftskombination aus. Gute Steifigkeit und Zähigkeit vereinen sich mit guter Schlagzähigkeit.

Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung

vorgeformt oder in Form von Platten oder Bahnen vorliegen.

Beschreibung der Komponenten

Polyphenylenether

Die in Frage kommenden Polyphenylenether sind bekannt; sie werden aus in ortho-Position durch Alkyl, Alkoxi, Chlor oder Brom disubstituierten Phenolen durch oxidative Kopplung hergestellt (vgl. US-Patent 3 661 848, 3 378 505, 3 306 874, 3 306 875 und 3 639 656). Die Alkyl- oder Alkoxigruppen, die bevorzugt 1 bis 4 C-Atome, aber kein α-ständiges tertiäres Wasserstoffatom enthalten, können ihrerseits durch Chlor oder Brom substituiert sein. Geeignete Polyphenylenether sind beispielsweise Poly-2,6-diethyl-1,4-phenylen-ether, Poly-2-methyl-6-ethyl-1,4-phenylen-ether, Poly-2-methyl-6-propyl-1,4-phenylen-ether, Poly-2,6-dipropyl-1,4-phenylen-ether, Poly-2-ethyl-6-propyl-1,4-phenylen-ether, Poly-2,6-dichlor-1,4-phenylen-ether und Poly-2,6-dibrom-1,4-phenylen-ether oder Copolymere, wie solche, die 2,3,6-Trimethylphenol enthalten, außerdem Polymermischungen. Bevorzugt ist Poly-2,6-dimethyl-1,4-phenylen-ether. Die geeigneten Polyphenylenether weisen im allgemeinen eine Grenzviskosität von 0,3 bis 0,7 dl/g, gemessen in Lösung in Chloroform bei 25 °C auf.

Styrolpolymerisat

Diese Komponente ist ein spezielles Blockpolymeres, nämlich ein Pfropf(co)polymer von Styrol oder Styrol-Acrylnitril, das auf einem Elastomeren (Kautschuk) entlang dessen Kette aufgepfropft ist; man bezeichnet solche Copolymere als Kammpolymere.

Der Einfluß des Gehalts an Pfropfcopolymeren auf die Kautschukmorphologie und die Produkteigenschaften ist u.a. von A.E. Echte in Angew. Makromol. Chem. 58/59, 175 (1977) und Angew. Makromol. Chem. 90, 95 (1980) und von H. Keskkula in Plastics and Rubber: Materials and Applications 1979 (5), 66-77 beschrieben. Demnach werden um so kleinere Kautschukpartikel gebildet, je höher der Gehalt an Pfropfcopolymeren ist. Es können auf diese Weise hochglänzende schlagzähe Produkte hergestellt werden. In der Technik werden häufig Blockkautschuke wie z.B. Styrol-Butadienblockkautschuk eingesetzt, um hochglänzende schlagfeste Produkte herzustellen (DE-OS 17 69 118; EP 00 21 488 und DE-AS 26 13 352).

Die Herstellung der erfindungsgemäßen Pfropfcopolymeren erfolgt nun durch Umsetzung allylische CH-Gruppen enthaltender Polymerer, bevorzugt eines Polydiens, in einer "En-Reaktion" mit einem 4-substituierten 1,2,4-Triazolin3,5-dion (II) oder mit einem Azodicarbonsäureester (III),

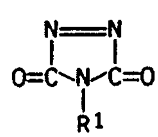

(II)

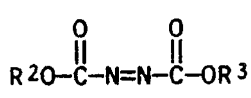

(III)

Oxidation der polymeranalogen Umsetzungsprodukte zu einem polymergebundenen Urazol- bzw. Hydrazolradikal und Zusatz des Monomeren, d.h. Styrol und ggf. Acrylnitril.

Das Pfropf-Verfahren besteht somit in der Bildung von freien Radikalen entlang eines vorgebildeten Kettenmoleküls und Zugabe von Monomeren, wobei durch Radikalkettenpolymerisation Seitenketten gebildet werden; allgemein ausgedrückt, wird ein beweglichen Wasserstoff enthaltendes Kettenmolekül der allgemeinen Struktur (I)

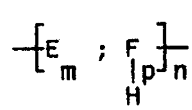

(I)

in der E und F jeweils m bzw. p einpolymerisierte Abschnitte (m und p ganze Zahlen) eines Kettenmoleküls und n eine Zahl von mehr als 100 bedeuten, mit einem Triazolindion der allgemeinen Formel II oder einem Azodicarbonsäureester der allgemeinen Formel III, in denen $R^1$ und $R^2$ und/oder $R^3$ von Wasserstoff verschieden ist,

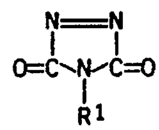

(II)

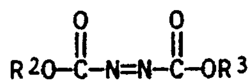

(III),

in an sich bekannter Weise umgesetzt, an den so erhaltenen Substituenten durch Oxidation Radikale erzeugt sowie mit dem radikalisch polymerisierbaren, olefinisch ungesättigten Monomeren zusammengebracht.

Die erfindungsgemäß erhaltenen Kammpolymeren sind neue Stoffe; es sind Pfropf(co)polymere die vorstellungsgemäß wiederkehrende Einheiten der allgemeinen Struktur

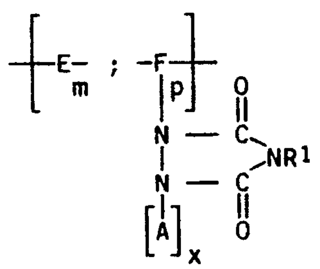

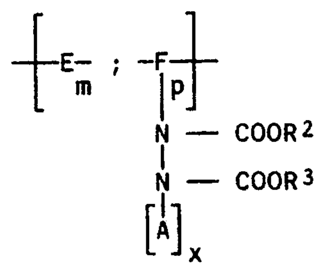

aufweisen sollen, wobei A eine polymere Seitenkette aus dem durch radikalische Polymerisation gebildeten Homo- oder Copolymeren, x deren Polymerisationsgrad, E und F einpolymerisierte Fadenabschnitte des "backbone"-Kautschuks und m und p jeweils wenigstens 1 und zusammen eine Zahl von mehr als 100 bedeuten, die durch Addition eines 4-substituierten 1,2,4-Triazolin-3,5-dions und/oder Azodicarbonsäureesters an einen eine allylische CH-Gruppierung oder einen anderen, bewegliche Protonen aufweisenden Fadenabschnitt gebildet worden sind, wobei die Substituenten $R^1$ bzw. $R^2$ und $R^3$ Alkyl, Aryl oder Hetaryl oder deren Äuqivalente bedeuten und $R^2$ und $R^3$ gleich oder verschieden sein können.

Die polymere Seitenkette A kann auch dargestellt werden durch

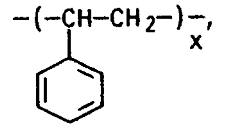

sofern es sich um Homopolystyrol handelt oder durch

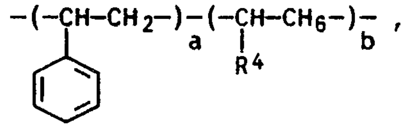

wobei der Polymerisationsgrad x sich durch die Summe aus a und b ergibt und $R^4$ den Rest eines mit Styrol copolymerisierbaren olefinischen Monomeren bedeutet wie z.B. -CN für Acrylnitril. Andere copolymerisierbare Monomere, die entsprechende Reste $R^4$ liefern, sind z.B. (Meth)acrylsäure und deren Ester mit Alkoholen, die 1 bis 8 C-Atome haben.

Die Zahl der Substituenten $R^1$ bzw. $R^2$ und $R^3$ je Polymermolekül entspricht der Zahl der Pfropfstellen;

sie ist i.a. gering und hat auf die Polymereigenschaften nur geringen Einfluß.

Die Herstellung der Pfropf(co)polymere verdeutlicht das folgende Schema, das die vorzunehmenden Schritte aufweist.

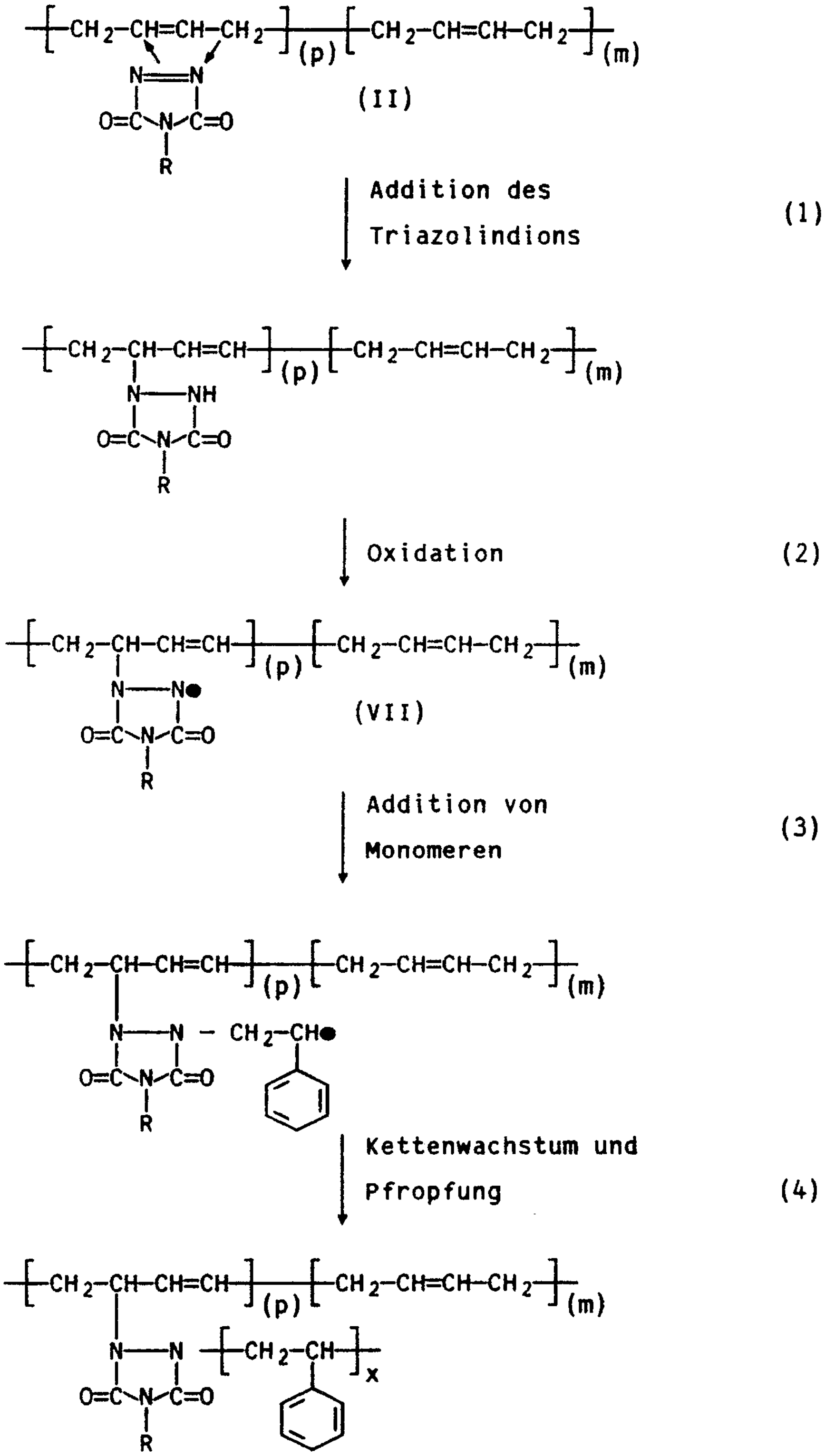


Das Verfahren kann in entsprechender Weise mit den strukturell verwandten Azodicarbonsäureestern durchgeführt werden.

Neben Polybutadien oder Copolymeren des Polybutadiens sind auch andere, allylische CH-Gruppen enthaltende Polydiene einer Pfropfung nach der Reaktionsfolge (1) - (4) zugänglich, z.B. Polyisopren, Butylkautschuk (Copolymerisat aus Isobutylen und Isopren), Polychloropren, Nitrilkautschuk (Copolymerisat

aus Butadien und Acrylnitril), Styrol-Dien-Blockkautschuke (Dien-Komponente: z.B. Butadien, Isopren, Chloropren, Dimethylbutadien), EPDM-Elastomere mit z.B. Ethylidennorbornen oder Dicyclopentadien als Dien-Komponente im Terpolymeren sowie deren teilhydrierte analoge Polydiene.

Die Modifizierung von Polydienen mit 4-substituierten 1,2,4-Triazolin-3,5-dionen ist an sich bekannt, z.B. aus
G.B. Butler; Ind. Eng. Chem. Prod. Res. Dev. 19, 512 - 528 (1980),
G.B. Butler und A.G. Williams; J. Polym. Sci. Polym. Chem. Ed. 17, 1117 - 1128 (1979),
K.-W. Leong und G.B. Butler; J. Macromol. Sci.-Chem., A 14, 287-319 (1980),
T.C.S. Chen. und G.B. Butler; J. Macromol. Sci.-Chem., A 16, 757-768 (1981),
L.S. Schechtman; Polym. Preprints 27 (2), 48-49 (1986) und
R. Stadler und J. Burgert; Makromol. Chem. 187, 1681 (1986).

4-substituierte 1,2,4-Triazolin-3,5-dione und offenkettige Azodicarbonsäureester addieren auch an Polymere, die bewegliche Protonen z.B. in Form von Alkohol-, Mercaptan-, Amin-, aktivierten Methylen- oder Säuregruppen enthalten, vgl. S.E. Müller in Houben-Weyl, Methoden der organischen Chemie, Band X/2, Teil 2, Seiten 147-157, Stuttgart 1967.

Damit sind auch solche erfindungsgemäß modifizierte Polymere einer gezielten Pfropfung zugänglich, die zwar keine En-Gruppierungen besitzen, aber durch Co- oder Terpolymerisation mit geeigneten Monomeren bewegliche Protonen im Polymeren enthalten, z.B. Butylacrylat, copolymerisiert mit Diolmonoacrylat, Acrylsäure, Acrylamid und deren Methacrylanalogen oder mit Maleinamid.

Ausgangsverbindungen für die erfindungsgemäß benötigten Verbindungen II sind geeignete Urazole. Solche Urazole sind an sich bekannt (DE-OS 30 27 612, Organic Synthesis Vol. 51, 121 (1971) und können durch Umsetzung von Hydrazodicarbonamid mit Aminen oder Hydrazincarbonsäureestern mit Isocyanaten hergestellt werden.

Die Oxidation von Urazolen zu 4-substituierten 1,2,4-Triazolin-3,5-dionen kann mit den unterschiedlichsten Oxidationsmitteln vorgenommen werden.
$N_2O_4$: J.C. Stickler und W.H. Pirkle
J. Org. Chem. 31, 3444 - 3445 (1966)
Ortho Pharmaceutical Corp.
DOS 27 04 330
DMSO: J.A. Moore, R. Muth und R. Sorace
J. Org. Chem. 39 (25), 3799 - 3800 (1974)
$Cl_2$: Bayer AG, DOS 32 44 657

In der Formel II kann $R^1$ stehen für einen Alkyl-, Cycloalkyl-, Aryl-, Aralkyl- oder Alkylarylrest mit bis zu 25 C-Atomen, einen 5- bis 8-gliedrigen Heterocyclus mit Stickstoff, Sauerstoff oder Schwefel als Heteroatom oder für $NR^1R^2$, wobei $R^1$ und $R^2$ $C_1$-$C_4$-Alkylgruppen oder Wasserstoff sind.

$R^1$ kann auch einen (Cyclo)alkenyl- oder -Alkinylrest mit 2 bis 25 C-Atomen darstellen.

Beispiele für Alkylreste sind Methyl, Ethyl, Propyl, Butyl, Pentyl, Hexyl, Heptyl, Octyl, Nonyl, Decyl, Undecyl, Dodecyl, Noepentyl, 3,5,5-Trimethylhexyl, 3-Methylhexyl, 2-Ethylhexyl und 2,5,5-Trimethylhexyl.

Ein Beispiel für einen Cycloalkylrest ist Cyclohexyl.

Beispiele für Aralkylreste sind Benzyl und Phenethyl.

Unsubstituierte Arylreste sind beispielsweise Phenyl und Naphthyl. Substituierte Arylreste sind Alkylaryl-, Cycloalkylaryl-, arylsubstituierte Alkylaryl- und arylsubstituierte Aryl-Reste.

Beispiele für Alkylarylreste sind 2-, 4- und 3-Tolyl, 2,6- und 2,4-Dimethylphenyl, Trimethylphenyl, 2-, 4- und 3-Isopropylphenyl, Nonylphenyl, tert.-Butylphenyl, 2,4-Diisopropylphenyl und Triisopropylphenyl.

Ein Beispiel für einen Cycloalkylrest ist 4-Cyclohexylphenyl. Beispiele für arylsubstituierte Alkylrest sind Benzylphenyl und 4-Phenethylphenyl.

Ein Beispiel für ein arylsubstituiertes Aryl ist Diphenyl.

Bevorzugte Reste $R^1$ sind Phenyl, 2-, 3- und 4-Tolyl, 2,6-Dimethylphenyl, 2,7-Diisopropylphenyl und Triisopropylphenyl.

Besonders bevorzugte Verbindungen II sind 4-Methyl- und 4-Phenyl-1,2,4-triazolin-3,5-dion.

Der Rest $R^1$ kann seinerseits durch ein oder mehrere funktionelle Gruppen substituiert sein. Beispiele für geeignete funktionelle Gruppen sind Halogen-, Nitril-, Ether-, Nitro-, Carbonsäureester-, Carbonsäureamid-, Säureanhydrid-, Imid-, Lactam-, Epoxy-, Urethan-, Oxazolin-, Carbonyl-, Thioether-, Sulfonsäureester-, Phosphatgruppen; geeignet sind auch Salze von Carboxylgruppen.

Daneben ist es auch möglich, als Rest $R^1$ Reste geeigneter UV- oder Hitze-Stabilisatoren, wie Derivaten des 2,2,4,4-Tetramethylpiperidins oder Benzotriazol (z.B. 2-(2-Hydroxy-5-methylphenyl)-benzotriazol, von Antioxidantien wie sterisch gehinderter Phenole (z.B. 2,6-Di-tert.-butylphenyl)phosphit), Flammschutzmittel wie halogenhaltiger Flammschutzmittel (z.B. Derivate des Tetrabrombisphenol A, des Tetrabromphthalimids

bzw. -säureanhydrids, bromierte Biphenylether oder bromierte Phenole), phosphorhaltiger Flammschutzmittel wie Phosphate und Phosphinoxide (z.B. Triphenylphosphat oder -phosphinoxid) oder von Derivaten des Melamins (z.B. Melamincyanurat), Farbstoffen wie Anthrachinonfarbstoffen, Antistatika wie Salzen von Carbonsäuren oder Sulfonsäuren (z.B. langkettige aliphatische Sulfonsäuresalze), quartäre Ammoniumsalze, oligomere oder polymere Ether des Ethylenglykols bzw. Propylenglykols, mesogene Seitengruppen, wie sie in DE-A 36 31 841 beschrieben sind (z.B. Alkoxyl-4′-methoxybiphenyl), oder anderer Wirkstoffe einzusetzen.

Die Substituenten $R^1$ allerdings müssen, was sich von selbst versteht, so beschaffen sein, daß sie die Modifizierungsreaktion nicht verhindern.

Die Herstellung der Azodicarbonsäureester III ist in "Methoden der organischen Chemie, Houben-Weyl, Band X/2, Teil 2, S. 818 f., Stuttgart 1967" beschrieben.

Die Reste $R^2$ und $R^3$ der Azodicarbonsäureester III können gleich oder verschieden sein und den Resten $R^1$ der Formel II entsprechen.

Über die Pfropfung auf den (gelösten) Kautschuk im Masse- oder Lösungspolymerisationsverfahren ist das folgende zu sagen:

Die Herstellung von Elastomeren oder anderen bewegliche Protonen enthaltenden Polymeren mit 4-substituierten 1,2,4-Triazolin-dionen oder mit Azoacylverbindungen erfolgt vorzugsweise in Lösung oder in Suspension. Für die Umsetzung geeignete Lösungsmittel sind solche, die sowohl die Polymeren als auch das entsprechende 4-substituierte 1,2,4-Triazolin-3,5-dion bzw. den Azodicarbonsäureester lösen, ohne die Umsetzung zu stören. Geeignete Lösungsmittel sind beispielsweise aromatische oder chlorierte Kohlenwasserstoffe, Tetrahyrofuran, Ethylacetat oder Dimethylformamid. Das 4-substituierte 1,2,4-Triazolin-3,5-dion wird in der Regel als Lösung zu der gerührten Polymerlösung langsam zugetropft. Die Umsetzung kann in einem weiten Temperaturbereich von $-50^\circ$ C bis zum Siedepunkt des entsprechenden Lösungsmittels, vorzugsweise zwischen $-20^\circ$ C und $+80^\circ$ C durchgeführt werden.

Eine Umsetzung der Polymeren kann aber auch in Substanz, d.h. in der Schmelze erfolgen.

Die Oxidation von 1,4-disubstituierten Triazolindionen zu stabilen cyclischen Diacylhydracylradikalen wird von W.H. Pirkle und P.L. Gravel in J. Org. Chem. 43 (5), 808-815 (1978); J. Org. Chem. 42 (8), 1367-1369 (1977) und J. Am. Chem. Soc. 96, 3335-3336 (1974) beschrieben. Unbekannt war bisher, daß die erzeugten Radikale in der Lage sind, eine radikalische Polymerisation zu starten und auch überraschend, da ähnliche Hydrazylradikale als Inhibitoren bei der radikalischen Polymerisation wirksam sind, z.B. Diphenylpikrylhydrazyl (DPPH)

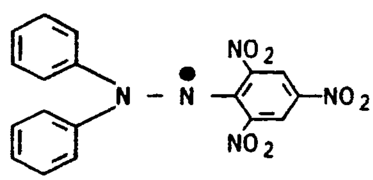

(B. Vollmert, Grundriß der Makromolekularen Chemie, Band I, S. 74; Karlsruhe 1985).

Die Oxidation des polymergebundenen Starters und damit - bei Gegenwart des Monomeren - die Auslösung der Pfropfreaktion gemäß Gleichung (2) erfolgt üblicherweise in Lösung. Als Lösungsmittel kommen die vorerwähnten Lösungsmittel in Betracht. Die Lösungsmittel können aber auch gegen radikalisch polymerisierbare Monomere ausgetauscht werden. Der Lösungsmittelaustausch kann in Destillationsanlagen sowohl diskontinuierlich als auch kontinuierlich durchgeführt werden. Üblicherweise werden kontinuierlich arbeitende Dünnschichtfilmverdampfer verwendet. Je nach Siedepunkt kann entweder im Vakuum oder unter Normaldruck gearbeitet werden.

Die Monomeren und Lösungsmittel können auch gleichzeitig in der Polymerlösung vorhanden sein.

Die Erzeugung von polymergebundenen Starter-Radikalen ist mit Oxidationsmitteln, welche ein genügend hohes Oxidationspotential aufweisen, ohne weiteres möglich. Als Oxidationsmittel kommen z.B. in Frage:
gelöster Sauerstoff; Peroxid-Verbindungen, die bei der radikalischen Polymerisation zum Polymerisationsstart üblicherweise eingesetzt werden; in organischen Medien lösliche Metallverbindungen, z.B. Fe- oder Cobaltacetylacetonat und andere komplexierte Oxidationsmittel.

Nach der Erzeugung des polymergebundenen Starterradikals kann nach Gleichung (3) die Addition an ein radikalisch polymerisierbares Monomere erfolgen, so daß Pfropfung resultiert. Bei Verwendung von Sauerstoff oder Peroxiden kann neben den Pfropf(co)polymeren auch das entsprechende ungepfropfte Homo- oder Copolymere entstehen. Auf diese Weise ist während der radikalischen Polymerisation eine "in

situ"-Pfropfung möglich.

Da gleichzeitig entstehende Pfropf(co)polymere und Homo- oder Copolymere chemisch einheitlich sind, werden "ideale Verträglichkeitsvermittler" während der Polymerisation erzeugt. über die Menge des gebundenen Starters kann so in vorteilhafter Art und Weise der Gehalt an "Verträglichkeitsvermittler" gezielt eingestellt werden. Auf die Verwendung der genannten Pfropf(co)polymeren zur Erzeugung von mit Kautschuk ausgerüsteten schlagfesten Thermoplasten wurde bereits hingewiesen.

Die Herstellung der erfindungsgemäßen Pfropf(co)polymeren kann kontinuierlich oder diskontinuierlich erfolgen. Diese Polymerisation kann in Masse-oder Lösungs- oder Masse-Suspensionspolymerisation in üblichen Polymerisationsapparaturen in einem weiten Temperaturbereich, wie z.B. von 40 °C bis 180 °C ausgeführt werden; bevorzugt ist ein Temperaturbereich von 70 bis 160 °C.

Die Einstellung des Molekulargewichts der Pfropf(co)polymeren kann u.a. durch Verwendung von Mercaptanen geregelt werden.

Schon während der Polymerisation oder danach können übliche Zusatzstoffe angewendet werden wie Schmiermittel, Entformungsmittel oder Antioxidantien.

Bei den Zusatzstoffen handelt es sich um übliche, i.a. mineralische Verstärkungsmaterialien wie Glaskugeln, Mineralfasern, Whiskern, Glimmer oder insbesondere Glasfasern in Mengen von bis zu 30 Gew.-Teilen, bezogen auf 100 Gew.-Teile der Summe der Bestandteile der Formmasse.

Zusätzlich zu den genannten Komponenten können die erfindungsgemäpen Formmassen weitere Stoffe wie übliche Hitze- und Lichtstabilisatoren, Gleit- und Entformungsmittel und Färbemittel wie Farbstoffe und Pigmente in üblichen Mengen enthalten. Ferner seien Flammschutzmittel genannt, insbesondere phosphorhaltige, wie Phosphorsäureester, Phosphinsäureester und Phosphinoxide. Gute Flammhemmung wird mit Triphenylphosphat und Triphenylphosphinoxid erzielt.

Die Herstellung der erfindungsgemäpen thermoplastischen Formmassen erfolgt zweckmäßigerweise durch Mischen der Komponenten bei Temperaturen im Bereich von 200 bis 320 °C, vorzugsweise 250 bis 300 °C in üblichen Mischvorrichtungen, wie z.B. Knetern, Banbury-Mischern und Einschneckenextrudern, vorzugsweise in einem Zweischneckenextruder. Um eine möglichst homogene Formmasse zu erhalten, ist eine intensive Durchmischung notwendig, was in bekannter Weise erreicht werden kann. Die Verweilzeiten liegen im allgemeinen im Bereich von 0,5 bis 30 min., vorzugsweise von 1 bis 5 min. Die Reihenfolge des Mischens der Komponenten kann variiert werden, es können ausgewählte Komponenten vorgemischt sein oder es können auch alle Komponenten gemeinsam gemischt werden.

Die in Tabelle 4 angegebenen Komponenten wurden mit jeweils 0,8 Gew.-Tellen Tris(nonylphenyl)-phosphit und 1,5 Gew.-Teilen Polyethylen auf einem Zweiwellenextruder bei 280 °C geschmolzen, homogenisiert, gemischt und granuliert.

Die erfindungsgemäßen Formmassen eignen sich gut zur Herstellung von Formteilen aller Art, z.B. durch Spritzguß oder Extrudieren. Sie können weiterhin dienen zur Herstellung von Folien und Halbzeug im Tiefzieh- oder Blasverfahren.

Die Formmassen bzw. die daraus hergestellten Formkörper zeichnen sich durch ein ausgewogenes Verhältnis von thermischen und mechanischen Eigenschaften aus. Sie besitzen dabei eine gute Wärmeformbeständigkeit, hohe Steifigkeit bei ausgezeichneter Schlagzähigkeit.

Nachstehend aufgeführte Werkstoffeigenschaften wurden bestimmt:

Die Vicattemperatur VST/B nach DIN 53 460.

Die $\epsilon$-Modul $E_Z$ nach DIN 53 457.

Die Kerbschlagzähigkeit $a_k$ nach DIN 53 453.

Die Probekörper wurden bei 280 °C spritzgegossen.

Die mittlere Teilchengröße $d_{50}$ (Gewichtsmittel) der dispersen Kautschukphase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50 %-Ordinatenwert kann auf der Abszisse dann der Äquivalentdurchmesser abgegriffen werden. Die angegebenen mittleren Durchmesser stellen dabei einen Mittelwert von mindestens 5000 Teilchen dar.

Die Pfropf-Ausbeute wurde bei einem Polymerisationsumsatz von 20 %, bezogen auf die eingesetzten Monomeren, bestimmt.

Der entnommene Polymersirup wurde in Ethylbenzol gelöst und anschließend das Polymere in 10-fachem Überschuß Ethanol ausgefällt. Das Polymere wurde filtriert, gründlich mit Ethanol gewaschen und bei 80 °C im Vakuum über Nacht getrocknet. An den gewonnenen Polymeren wurde die Pfropfausbeute wie folgt bestimmt:

2 mal je 5,0 g der zu untersuchenden Probe werden mit 53 ml Methylethylketon und 1 ml einer 0,6 %igen Methylethylketon/Irganox 1076-Lösung im Zentrifugenbecher übergossen und mit einem Magnetrührer bis

zur vollständigen Lösung des Polystyrols gerührt. Anschließend werden jeder Probe unter Rühren 66 ml Aceton zugetropft und das Gemisch 15 Minuten gerührt. Nun wird die Mischung in einer Laborzentrifuge (Beckmann J 21 B) bei 14000 Umdrehungen/Minute 20 Minuten zentrifugiert. Die überstehende Lösung, die das nicht gepfropfte Polystyrol enthält, wird am Rotationsverdampfer zur Trockene eingedampft. Dieser Vorgang wird mit dem unlöslichen Rückstand noch 2 mal wiederholt und die löslichen ungepfropften Polystyrolfraktionen gemeinsam zur Trockene eingedampft. Zur vollständigen Trocknung wird bei 60 °C über Nacht in einem Vakuumschrank getrocknet.

Die Menge des gepfropften Polystyrols ergibt sich aus der Auswaage des ebenfalls getrockneten Extraktionsrückstandes und dem Abzug der bekannten eingesetzten Menge Kautschuk.

Die Pfropfausbeute ist nach folgender Definition zu berechnen:

$$\text{Pfropfausbeute [\%]} = \frac{PS_{gepfropft}}{PS_{gepfropft} + PS_{gepfropft}} \times 100$$

Für Beispiele und Vergleichsversuche wurden die folgenden Komponenten eingesetzt.

Komponente A

Poly-2,6-dimethyl-1,4-phenylenether, nämlich

A (1): Poly-2,6-dimethyl-1,4-phenylenether mit einer Grenzviskosität von 0,50 dl/g, gemessen in $CHCl_3$ bewi 25 °C

A (2): wie A (1), jedoch mit einer Grenzviskosität von 0,60 dl/g.

Komponente B

Pfropfung von PTD-modifiziertem Polybutadien mit Styrol

150 g Polybutadien (Buna HX 500; Bayer AG) werden in 1350 g Cyclohexan gelöst. Die in der Tabelle 1 angegebene Menge 4-Phenyl-1,2,4-triazolin-3,5-dion (PTD) wird in 40 ml trockenem THF gelöst und langsam zu der gerührten Kautschuklösung getropft. Zum Vergleich wurde PTD in einem Blindversuch weggelassen. Die rote Farbe des PTD verschwindet innerhalb von 2 Minuten nach Zugabeende. Anschließend wird das Cyclohexan unter vermindertem Druck (200 mbar/50 bis 60 °C) gegen 1725 g Styrol ausgetauscht. Nach Aufheben des Unterdrucks werden zusätzlich 44,4 g Weißöl (Minog 70), 2,25 g Irganox 1076 als Stabilisator und 1,9 g tert.-Dodecylmercaptan als Molekulargewichtsregler zum Reaktionsgemisch gegeben.

Alle Versuche wurden diskontinuierlich nach dem Masse-Suspensions-Polymerisations-Verfahren in einem mit einem Ankerrührer ausgestatteten 5 l Reaktor durchgeführt.

Man polymerisiert zunächst isotherm in Lösung bei 123 °C und 200 Rührerumdrehungen je Minute bis zu einem Umsatz von 40 %, bezogen auf Styrol. Danach wird in wäßriger Suspension weiterpolymerisiert.

Hierzu werden 1,9 g Dicumylperoxid sowie 1800 ml $H_2O$, 18 g eines Suspensionshilfsmittels auf Basis Ethylenoxid (Luviscol K 90 der BASF Aktiengesellschaft) und 1,8 g Natriumpyrosphosphat zugegeben. In Suspension wird bei 300 Rührerumdrehungen je Minute 6 Stunden isotherm bis zu einem Umsatz von mehr als 99 %, bezogen auf Styrol, polymerisiert.

Das erhaltene Perlpolymerisat wird mit destilliertem Wasser gründlich gewaschen und bei 80 °C über Nacht in einem Vakuumtrockenschrank getrocknet. Die mittlere Teilchengröße $d_{50}$ der Polymerisate und die Pfropfausbeute sind in Tabelle 1 zusammengefaßt.

Tabelle 1

| Schlagfestes Polystyrol auf Basis von mit PTD modifiziertem Polybutadien | | | |
|---|---|---|---|
| Komponente | Zugabe von PTD [g] | Pfropfausbeute [%] | $d_{50}$ [µm] |
| B (1) | - | 7,5 | 1,9 |
| B (2) | 0,110 | 10,4 | 1,3 |
| B (3) | 0,450 | 15,4 | 0,6 |

Pfropfung von PTD-modifiziertem Polybutadien mit Styrol

150 g Polybutadien (Buna HX 500; Bayer AG) werden in 1350 g Cyclohexan gelöst. Die in der Tabelle 1 angegebene Menge 4-phenyl-1,2,4-triazolin-3,5-dion (PTD) wird in 40 ml trockenem THF gelöst und langsam zu der gerührten Kautschuklösung getropft. Zum Vergleich wurde PTD in einem Blindversuch weggelassen. Die rote Farbe des PTD verschwindet innerhalb von 2 Minuten nach Zugabeende. Anschließend wird das Cyclohexan unter vermindertem Druck (200 mbar/50 bis 60° C) gegen 1725 g Styrol ausgetauscht. Nach Aufheben des Unterdrucks werden zusätzlich 44,4 g Weißöl (Minog 70), 2,25 g Irganox 1076 als Stabilisator und 1,9 g tert.-Dodecylmercaptan als Molekulargewichtsregler zum Reaktionsgemisch gegeben.

Die Versuche werden diskontinuierlich nach dem Masse-Suspensions-Verfahren in einem mit einem Ankerrührer ausgestatteten 5 l-Reaktor durchgeführt.

Das Reaktionsgemisch wird isotherm in Lösung bei 123° C bei 200 Rührerumdrehungen je Minute bis zu einem Umsatz von 40 %, bezogen auf Styrol und danach in wäßriger Suspension zu Ende polymerisiert.

Hierzu werden 1,9 g Dicumylperoxid sowie 1800 ml $H_2O$, 18 g eines Suspensionshilfsmittels auf Basis Ethylenoxid (Luviskol K 90 der BASF AG) und 1,8 g Natriumpyrophosphat zugegeben. In Suspension wird bei 300 Rührerumdrehungen je Minute 6 Stunden isotherm bei 130° C bis zu einem Umsatz von mehr als 99 %, bezogen auf Styrol, polymerisiert.

Das erhaltene Perlpolymerisat wird mit destilliertem Wasser gründlich gewaschen und bei 80° C über Nacht i.v. getrocknet. Die Eigenschaften der Polymerisate und die Pfropfausbeute sind in Tabelle 2 zusammengefaßt.

Tabelle 2

| Schlagfestes Polystyrol auf Basis von mit PTD modifiziertem EPDM | | | |
|---|---|---|---|
| Komponente | Zugabe von PTD [g] | Pfropfausbeute [%] | $d_{50}$ [µm] |
| B (4) | - | 3,9 | 2,0 |
| B (5) | 0,45 | 20,4 | 2,1 |

Pfropfung von PTD-modifiziertem Butylkautschuk mit Styrol

150 g Butylkautschuk (Polysar Butyl 100; Polyisobutylen-co-isopropen mit einem Ungesättigtheitsgrad von 0,6 mol-%) werden in 1350 g Cyclohexan gelöst. Die in der Tabelle 4 angegebene Menge PTD wird in 40 ml trockenem THF gelöst und langsam zu der gerührten Kautschuklösung getropft. Die rote Farbe des PTD verschwindet innerhalb von 5 Minuten nach Zugabeende. Anschließend wird das Cyclohexan unter vermindertem Druck (200 mbar/50 bis 60° C) gegen 1725 g Styrol ausgetauscht. Bei atmosphärischem

Druck werden 44,4 g Weißöl (Minog 70), 2,25 g Irganox 1076 und 1,9 g tert.-Dodecylmercaptan als Molekulargewichtsregler zugegeben.

Die Versuche werden diskontinuierlich nach dem Masse-Suspensions-Verfahren in einem mit einem Ankerrührer ausgestatteten 5 l-Reaktor durchgeführt.

Das Reaktionsgemisch wird isotherm in Lösung bei 123 °C und 200 Rührerumdrehungen je Minute bis zu einem Umsatz von 40%, bezogen auf Styrol und danach in wäßriger Suspension zu Ende polymerisiert.

Hierzu werden 1,9 g Dicumylperoxid sowie 1800 ml $H_2O$, 18 g eines Suspensionshilfsmittels auf Basis Ethylenoxid (Luviskol K 90 der BASF AG) und 1,8 g Natriumpyrophosphat zugegeben. In Suspension wird bei 300 Rührerumdrehungen je Minute 6 Stunden isotherm bei 130 °C bis zu einem Umsatz von mehr als 99 %, bezogen auf Styrol, polymerisiert.

Das erhaltene Perlpolymerisat wird mit destilliertem Wasser gründlich gewaschen und bei 80 °C über Nacht i.v. getrocknet. Die Eigenschaften der Polymerisate und die Pfropfausbeute sind in Tabelle 4 zusammengefaßt.

Tabelle 3

| Schlagfestes Polystyrol auf Basis von mit PTD modifizierten Butylacrylat | | | |
|---|---|---|---|
| Komponente | Zugabe von PTD [g] | Pfropfausbeute [%] | $d_{50}$ [µm] |
| B (6) | - | 6,5 | 1,8 |
| B (7) | 0,45 | 12,4 | 1,7 |

Für Vergleichsversuche wurden noch folgende Komponenten eingesetzt:

Polystyrole gemäß EP 48 399

B (8) Schlagfestes Polystyrol mit einer mittleren Teilchengröße ($d_{50}$) 5,5 [µm]

B (9) Schlagfestes Polystyrol mit einer mittleren Teilchengröße ($d_{50}$) von 0,6 [µm]

F (1) hydrierter SBS-Blockkautschuk Kraton G 1650 (Shell AG; gemäß DE-PS 24 48 848).

Tabelle 4

| Beispiele und Vergl.- beispiele | Komponente A [Gew.-%] | Komponente B [Gew.-%] | Komponente F [Gew.-%] | Vicat [°C] | E-Modul [N/mm²] | Kerbschlagzähigkeit [kJ/m²] |
|---|---|---|---|---|---|---|
| 1 | $A_1$ 30 | $B_3$ 70 | - | 125 | 2530 | 10,8 |
| 2* | $A_1$ 30 | $B_1$ 70 | - | 123 | 2420 | 9,1 |
| 3* | $A_1$ 30 | $B_8$ 63 | - | 121 | 2380 | 9,4 |
| | | $B_9$ 7 | - | | | |
| 4 | $A_2$ 40 | $B_2$ 60 | - | 133 | 2500 | 12,3 |
| 5* | $A_2$ 38 | $B_1$ 57 | $F_1$ 5 | 128 | 2350 | 14,1 |
| 6 | $A_1$ 50 | $B_5$ 50 | - | 140 | 2700 | 13,4 |
| 7* | $A_1$ 50 | $B_4$ 50 | - | 133 | 2470 | 9,3 |
| 8 | $A_2$ 25 | $B_7$ 75 | - | 115 | 2280 | 10,1 |
| 9* | $A_2$ 25 | $B_6$ 75 | - | 113 | 2170 | 8,4 |

## Ansprüche

Thermoplastische Formmasse auf der Grundlage einer Polymermischung aus
10 bis 90 Gew.-% eines Polyphenylenethers und
90 bis 10 Gew.-% eines schlagfest modifizierten Styrolpolymerisats
der außerdem, bezogen auf die Formmasse bis zu 30 Gew.-% übliche Zusatzstoffe in jeweils wirksamer Menge enthält, dadurch gekennzeichnet, daß das Styrolpolymerisat modifiziert ist mit einem Pfropfcopolymeren mit wiederkehrenden Einheiten der allgemeinen Struktur I oder II

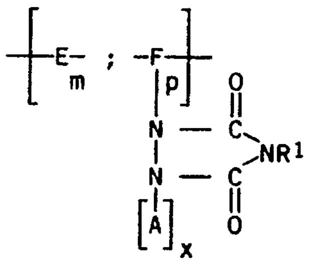
(I)

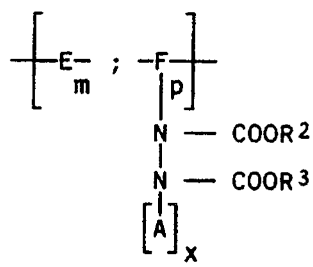
(II)

in der A eine polymere Seitenkette aus einem durch radikalische Polymerisation gebildeten Homo- oder Copolymeren des Styrols, x deren Polymerisationsgrad, E und F einpolymerisierte Fadenabschnitte eines Elastomeren und m und p jeweils wenigstens 1 und zusammen eine Zahl von mehr als 100 bedeuten, die durch Addition eines 4-substituierten 1,2,4-Triazolin-3,5-dions und/oder Azodicarbonsäureesters an einen eine allylische CH-Gruppierung oder einen anderen, bewegliche Protonen aufweisenden Fadenabschnitt des Elastomeren gebildet worden sind, wobei die Substituenten $R^1$ bzw. $R^2$ und $R^3$ Alkyl, Aryl oder Hetaryl oder deren Äuqivalente bedeuten und $R^2$ und $R^3$ gleich oder verschieden sein können.